(19) Europäisches Patentamt / European Patent Office / Office européen des brevets

(11) **EP 2 408 087 B1**

(12) **FASCICULE DE BREVET EUROPEEN**

(45) Date de publication et mention de la délivrance du brevet:
**12.10.2016 Bulletin 2016/41**

(51) Int Cl.:
*H02J 7/02* *(2006.01)*   *B60L 11/18* *(2006.01)*
*H02M 7/00* *(2006.01)*   *H02M 7/797* *(2006.01)*
*H02J 7/00* *(2006.01)*

(21) Numéro de dépôt: **11305698.0**

(22) Date de dépôt: **07.06.2011**

(54) **Procédé de commande de commutateurs de bras de commutation, notamment pour la charge de moyens d'accumulation, et dispositif de charge correspondant**

Steuerverfahren von Umschaltern von Führungsarmen, insbesondere für die Aufladung von Akkumulatoren, sowie entsprechende Aufladevorrichtung

Method for controlling switching arm switches, in particular for loading accumulation resources, and the corresponding loading device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2010 FR 1055099**

(43) Date de publication de la demande:
**18.01.2012 Bulletin 2012/03**

(73) Titulaire: **Valeo Systèmes de Contrôle Moteur 95800 Cergy Saint Christophe (FR)**

(72) Inventeurs:
• **Bouchez, Boris**
  **95800 Cergy - Le Haut (FR)**
• **De Sousa, luis**
  **95670 Éragny sur Oise (FR)**

(56) Documents cités:
**FR-A1- 2 938 711**

• **LU B ET AL: "Bridgeless PFC implementation using one cycle control technique", APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA,IEEE, US, vol. 2, 6 mars 2005 (2005-03-06), pages 812-817VOL.2, XP010809329, DOI: DOI:10.1109/APEC.2005.1453073 ISBN: 978-0-7803-8975-5**

**EP 2 408 087 B1**

**Description**

La présente invention concerne un procédé de commande de commutateurs de bras de commutation et s'applique notamment dans le domaine des moteurs ou alternateurs alimentés par des batteries rechargeables. L'invention trouvera avantageusement application dans le domaine des automobiles électriques dans lesquelles les batteries peuvent alimenter le moteur via un onduleur et être rechargées lorsque l'automobile est à l'arrêt.

Toutefois, bien que particulièrement prévue pour une telle application l'invention pourra être utilisée dans d'autres domaines et notamment dans des dispositifs de génération d'énergie de type éolien ou hydraulique.

Classiquement un véhicule électrique est équipé de batteries haute tension délivrant un courant continu à un onduleur qui transforme ce courant continu en un courant alternatif permettant d'alimenter un moteur électrique, ce dernier assurant la mise en mouvement du véhicule.

De manière à assurer la recharge de ces batteries haute tension, il est connu d'équiper le véhicule d'un dispositif de charge intégré au véhicule électrique comprenant un convertisseur contrôleur de puissance sans pont de diode également connu sous le nom de « Bridgeless PFC ».

Des courants de mode commun générés par le découpage du convertisseur circulent dans les capacités parasites que présente l'électronique par rapport au châssis, ou le moteur par rapport au châssis ou bien encore la batterie par rapport aux châssis. Ces courants se rebouclent par le châssis, le fil de terre relié au neutre du réseau électrique. Le chargeur émet donc des perturbations sur le réseau électrique. Des normes limitent l'émission de perturbations haute fréquence sur le réseau électrique.

Des solutions de filtrage passif peuvent aider à résoudre le problème. Il s'agît par exemple de mettre un filtre de mode commun sur l'entrée du chargeur. Ainsi, les courants de mode commun se rebouclent par le filtre au lieu d'aller sur le réseau. Néanmoins, l'inconvénient des filtres hormis le coût et le volume est qu'ils vont générer des courants de fuite basses fréquences (de l'ordre de 50Hz/60Hz) entre le secteur et la terre.

La demande de brevet FR 2938711 A1 publié le 21 mai 2010 décrit un procédé de commande des commutateurs de bras de commutation, chaque bras de commutation comportant respectivement un premier et un deuxième commutateurs.

L'invention a donc pour objectif de limiter la génération de courants de mode commun en évitant que les capacités parasites soient excitées par des variations de tensions.

À cet effet, l'invention a pour objet, selon l'un de ses aspects, un procédé de commande des commutateurs de bras de commutation, chaque bras de commutation comportant respectivement un premier et un deuxième commutateur, le procédé comprenant les étapes suivantes :

- a) on commande la fermeture d'un nombre prédéterminé de premiers commutateurs respectivement pendant un temps de fermeture associé, et
- b) à chaque ouverture d'un premier commutateur précédemment fermé, on commande la fermeture d'un autre premier commutateur pendant un temps de fermeture associé, de sorte qu'un nombre constant de premiers commutateurs sont fermés en même temps.

L'invention a encore pour objet, selon un autre de ses aspects, un procédé de charge de moyens d'accumulation par l'intermédiaire d'un dispositif électrique de charge comprenant des bras de commutation comportant respectivement un premier et un second commutateurs, caractérisé en ce qu'il comprend au moins les étapes a) et b) du procédé ci-dessus, étapes selon lesquelles:

- a) on commande la fermeture d'un nombre prédéterminé de premiers commutateurs respectivement pendant un temps de fermeture associé, et
- b) à chaque ouverture d'un premier commutateur précédemment fermé, on commande la fermeture d'un autre premier commutateur pendant un temps de fermeture associé, de sorte qu'un nombre constant de premiers commutateurs sont fermés en même temps.

Le fait qu'il y ait un nombre constant de commutateurs d'un même niveau sur les bras de commutation qui soient fermés en même temps, notamment lors de la charge de moyens d'accumulation, permet d'imposer une tension de neutre qui soit constante. On réduit ainsi les variations de tensions susceptibles d'exciter les capacités parasites, et donc les courants de mode commun.

Les premiers commutateurs peuvent avoir la même position par rapport aux deuxièmes commutateurs. Les premiers commutateurs sont par exemple sur le haut des bras de commutation tandis que les deuxièmes commutateurs sont sur le bas des bras de commutation.

Ledit procédé de commande ou de charge peut comporter en outre une ou plusieurs des caractéristiques suivantes, seules ou en combinaison :

- on commande la fermeture desdits premiers commutateurs par transmission de signaux de commande de modulation par largeur d'impulsion PWM,
- les signaux de commande sont en phase,
- les signaux de commande sont déphasés,
- ledit dispositif de charge est triphasé et la modulation moyenne des phases dudit dispositif de charge est égale à 1/3,
- le rapport entre le nombre de premiers commutateurs fermés en même temps et le nombre total de premiers et seconds commutateurs fermés en même temps est égal à 1/3.

L'invention concerne également, selon un autre de ses aspects, un dispositif de charge correspondant pour la mise en oeuvre du procédé de commande ou de charge tel que défini ci-dessus. Ce dispositif électrique de charge de moyens d'accumulation comporte :

- des bras de commutation comprenant respectivement un premier et un second commutateurs, et
- un dispositif de commande desdits commutateurs, configuré pour commander la fermeture d'un nombre prédéterminé de premiers commutateurs respectivement pendant un temps de fermeture associé, et pour commander à chaque ouverture d'un premier commutateur précédemment fermé la fermeture d'un autre premier commutateur pendant un temps de fermeture associé, de sorte qu'un nombre constant de premiers commutateurs soient fermés en même temps, lors de la charge des moyens d'accumulation.

Ledit dispositif de charge peut comporter en outre une ou plusieurs des caractéristiques suivantes, seules ou en combinaison :

- ledit dispositif comporte trois bras de commutation,
- ledit dispositif comporte trois structures de pont en H respectivement réalisées par deux bras de commutation,
- les commutateurs comportent respectivement un transistor et une diode en inverse,
- ledit dispositif comporte un onduleur comportant lesdits bras de commutation,
- ledit dispositif comporte un convertisseur DC/DC entre l'onduleur et les moyens d'accumulation,
- ledit dispositif comporte un moteur à courant alternatif triphasé,
- le dispositif de commande est configuré pour commander les commutateurs de manière à passer d'un mode d'alimentation dudit moteur à un mode de charge des moyens d'accumulation et inversement.

Le dispositif de charge peut comprendre des inductances, ces dernières étant le cas échéant formées par les enroulements des phases d'un moteur électrique. Dans le cas d'un moteur triphasé, trois inductances peuvent ainsi être formées par les enroulements du moteur.
Une connectique permettant le raccordement à un réseau électrique peut être intégrée au dispositif
D'autres caractéristiques et avantages de l'invention ressortiront de la description suivante, donnée à titre d'exemple, sans caractère limitatif, en regard des dessins annexés sur lesquels :

- la figure 1 représente de manière schématique un dispositif de charge triphasé avec un réseau électrique triphasé pour un véhicule automobile,
- la figure 2 représente de façon simplifiée une partie du dispositif de charge selon un premier mode de réalisation,
- la figure 3 illustre un chronogramme représentant les signaux de commande du dispositif de la figure 2 lors du procédé de charge selon l'invention,
- la figure 4 représente de manière schématique et simplifiée un deuxième mode de réalisation du dispositif de charge,
- la figure 5 illustre un chronogramme représentant les signaux de commande du dispositif de la figure 4 lors du procédé de charge.

Sur ces figures et dans la suite de la description, les éléments sensiblement identiques sont identifiés par les mêmes numéros de référence.

**Premier mode de réalisation : Onduleur à trois bras de commutation**

Dispositif

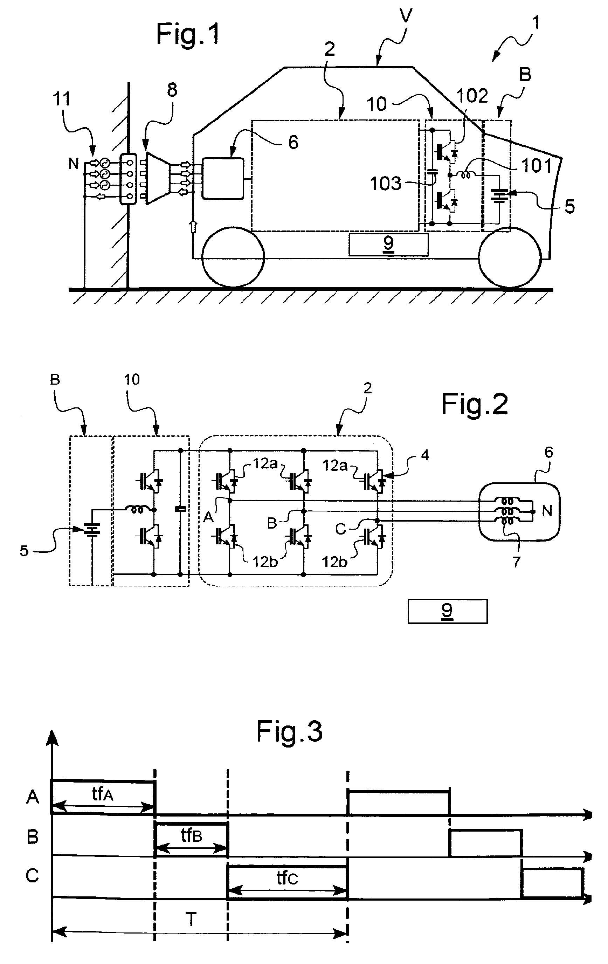

En se reportant aux figures 1 et 2, on voit représenté de façon schématique un exemple non limitatif de dispositif 1 de charge pour un véhicule automobile V par exemple hybride ou électrique, avec des moyens de commutation 4 comportant trois bras de commutation A,B,C et des inductances 7. Ce dispositif 1 permet de recharger des moyens d'accumulation 5 formant une batterie B du véhicule V.
Chaque bras de commutation A, B, C comporte dans l'exemple décrit deux commutateurs 12a, 12b répartis sur les bras A à C ; un premier commutateur 12a sur le haut du bras de commutation par rapport à la figure 2 et un deuxième commutateur 12b sur le bas du bras de commutation.
On peut prévoir que ces moyens de commutation 4 soient intégrés dans un onduleur 2 du dispositif 1.
On peut également prévoir que les inductances 7 soient formées par les enroulements d'un moteur triphasé 6 à courant alternatif, représenté partiellement. Dans ce cas, les bras de commutation sont reliés par leurs points milieu aux phases du moteur 6.
Le dispositif 1 comporte également dans l'exemple des figures 1 et 2 une connectique 8 permettant le raccordement à la prise d'un réseau 11 électrique triphasé. Cette connectique peut comporter des moyens de verrouillage, non représentés dans les figures annexées, permettant d'empêcher l'accès à la prise électrique en cas de mise sous tension du dispositif 1. La connectique 8 peut être de plus associée à des seconds moyens de verrouillage (non représentés) empêchant à l'utilisateur l'accès aux conducteurs (qui sont alors sous tension) lors du mode d'alimentation.

Le dispositif de charge 1 peut alors assurer la charge de la batterie B à partir du réseau électrique 11 relié à la terre, en employant les inductances 7.

Le dispositif de charge 1 comporte encore dans l'exemple considéré un circuit de commande 9 permettant de piloter les commutateurs 12a, 12b. Sur les figures, la liaison entre le circuit de commande 9 et les commutateurs 12a, 12b n'a pas été représentée pour faciliter la compréhension des figures.

Le dispositif 1 peut comporter également un convertisseur DC/DC 10 disposé entre l'onduleur 2 et les moyens d'accumulation 5. L'utilisation d'un convertisseur DC/DC 10 permet d'adapter les tensions et par conséquent d'optimiser le dimensionnement de l'onduleur sans dégrader le rendement. En effet la tension des moyens d'accumulation 5 varie avec leurs charges, les variations allant du simple au double, l'utilisation d'un convertisseur DC/DC 10 permet de dimensionner l'onduleur 2 pour une tension plus basse, ce dernier devant laisser passer deux fois moins de courant.

À titre d'exemple, ce convertisseur 10 peut comporter une inductance 101 connectée aux moyens d'accumulation 5, deux commutateurs 102 dont le point milieu est relié à l'inductance 101, et un condensateur 103 connecté aux bornes des deux commutateurs 102.

Fonctionnement

En mode de charge dans lequel le dispositif 1 assure la charge de la batterie B à partir du réseau électrique 11 relié à la terre, en employant les inductances 7, le circuit de commande 9 pilote les bras A à C de façon à ce qu'il y ait à tout instant un nombre constant n de commutateurs sur un même niveau fermés en même temps, par exemple les premiers commutateurs 12a sur le haut. Bien entendu on aurait pu choisir les seconds commutateurs 12b sur le bas.

En se référant également à la figure 3, lors du procédé de charge de la batterie B, on commande par exemple sur une période T donnée :

- la fermeture du premier interrupteur 12a du premier bras A pendant un temps de fermeture $tf_A$,
- lorsque le temps de fermeture $tf_A$ du premier commutateur 12a du premier bras A s'achève et que ce premier commutateur 12a s'ouvre, on commande la fermeture du premier commutateur 12a du deuxième bras B pendant un temps de fermeture $tf_B$, et
- lorsque le temps de fermeture $tf_B$ du premier commutateur 12a du deuxième bras B s'achève et que ce premier commutateur 12a s'ouvre, on commande la fermeture du premier commutateur 12a du troisième bras C pendant un temps de fermeture $tf_C$.

Ainsi, les intervalles de temps sur lesquels les commutateurs 12a sont fermés sont distincts. Cette synchronisation permet d'avoir un commutateur 12a fermé à la fois sur la période T. Il n'y a pas de chevauchement des signaux de commande. On assure ainsi une tension constante au neutre N du réseau 11.

Dans cet exemple le nombre constant n de premiers commutateurs 12a devant être fermés en même temps est égal 1. Ce nombre se calcule à partir de la modulation moyenne comme on le détaille ci-dessous.

Chaque bras A à C est modulé avec une technique de modulation de largeur d'impulsion, en anglais PWM pour « Pulse Width Modulation ». Comme précisé précédemment, ces bras A à C sont modulés de manière à générer un courant sinusoïdal dans chaque phase. Dans le cas d'un dispositif de charge triphasé, chaque phase est déphasée de $2\pi/3$ et les profondeurs de modulation m sont égales. Les modulations de chaque phase sont donc calculées selon les équations suivantes (1) :

$$
(1) \begin{cases} m_a(t) = k + m * \cos(wt) \\ m_b(t) = k + m * \cos\left(wt - \dfrac{2\pi}{3}\right) \\ m_c(t) = k + m * \cos\left(wt - \dfrac{4\pi}{3}\right) \end{cases}
$$

(avec k étant la modulation moyenne, et $m_a(t)$, $m_b(t)$ et $m_c(f)$ la modulation de chaque phase a, b, c.)

La somme des modulations $m_x$ est donc égale à 3k et pour ne pas avoir de chevauchement il faut que la somme des modulations soit égale à 1 en conséquence, la modulation moyenne k doit être égale à 1/3 (voir relation (2)) :

$$
(2) \quad \sum m_x = 3k < 1 \Rightarrow k = \frac{1}{3}
$$

Par conséquent, le ratio entre le nombre de premiers commutateurs 12a et le total de commutateurs 12a, 12b fermés en même temps est de 1/3.

Selon ce premier mode de réalisation, il y a trois bras de commutation A, B, C et six commutateurs 12a, 12b répartis sur ces trois bras A à C. En conséquence, lorsque trois commutateurs 12a, 12b sont fermés, trois autres commutateurs 12a, 12b sont ouverts. Sur les trois commutateurs fermés 1/3 doit être un premier commutateur 12a sur le haut des bras de commutation, les deux autres commutateurs fermés sont des seconds commutateurs 12b sur le bas des bras de commutation.

On obtient donc un nombre constant n d'un premier commutateur 12a fermé (relation (3)):

$$
(3)\ n = 1
$$

Bien entendu, le dispositif de charge 1 triphasé décrit ci-dessus est généralisable à un système polyphasé.

De plus, dans le cas particulier où les moyens de commutation 4 sont intégrés dans l'onduleur 2, le dispositif 1 est prévu pour fonctionner en plus du mode de charge dans lequel il assure la charge de la batterie B à partir du réseau électrique 11 relié à la terre, en employant les enroulements 7 du moteur 6 comme inductance, selon un mode d'alimentation dans lequel il assure l'alimentation en courant alternatif du moteur 6, à partir de la batterie B.

Le passage du mode d'alimentation au mode de charge est alors géré par le circuit de commande 9.

En mode d'alimentation, le circuit de commande 9 pilote les bras A à C de façon à permettre la circulation d'un courant alternatif dans la phase correspondante du moteur 6. Les courants alternatifs circulant dans les trois phases du moteur sont coordonnés de manière classique pour que le moteur tourne. Les commutateurs 12a,12b, qui sont dans le présent exemple des transistors de puissance avec une diode montée en inverse, peuvent être pilotés selon une commande PWM (Pulse Width Modulation, en français : modulation à largeur d'impulsions) sinusoïdale classique.

En mode de charge, le circuit de commande 9 pilote les bras A à C tel que décrit précédemment.

**Deuxième mode de réalisation : Onduleur à six bras de commutation**

Dispositif

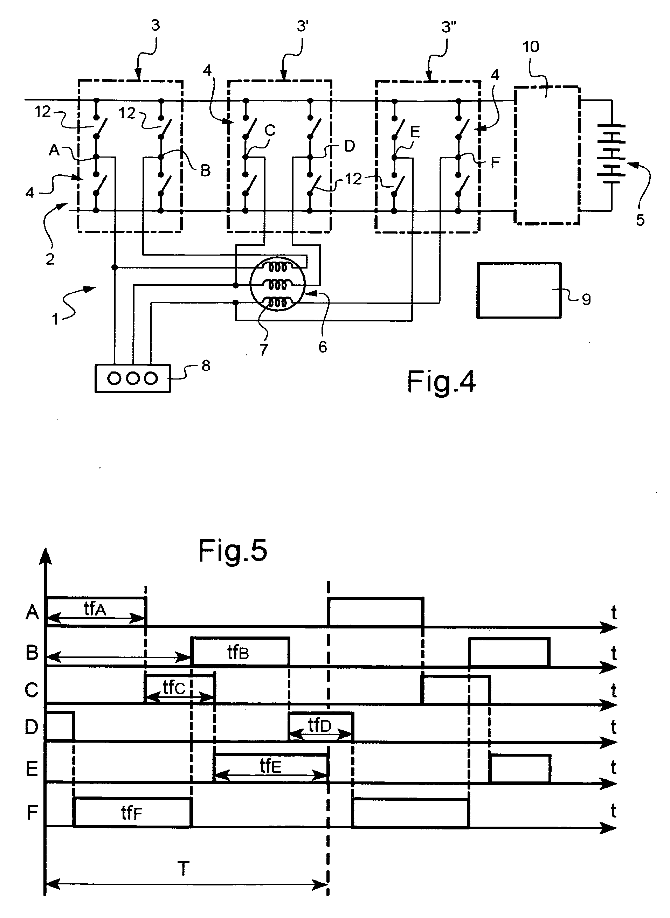

En se référant maintenant aux figures 1 et 4, on décrit un deuxième mode de réalisation selon lequel le dispositif 1 présente six bras de commutation formant trois ponts en H, 3,3',3" par exemple intégrés dans l'onduleur 2.

Les moyens de commutation 4 comportent dans cet exemple donc six bras de commutation A, B, C, D, E, F.

Chaque bras de commutation A, B, C, D, E, F comporte deux commutateurs 12a, 12b répartis sur les six bras A à F ; comme précédemment un premier commutateur 12a sur le haut du bras de commutation par rapport à la figure 4 et un deuxième commutateur 12b sur le bas du bras de commutation.

Un avantage du pont en H par rapport au pont triphasé classique est que son utilisation double la tension appliquée aux phases du moteur 6 pour une même tension, de la sorte, bien que comportant un doublement du nombre de commutateurs 12a, 12b, la surface de silicium utilisée sera identique pour le pont en H à celle du pont triphasé classique ; puisqu'en effet les courants de phase sont divisés par deux.

L'utilisation des ponts en H permet en outre de réduire les pertes dues aux commutations.

Selon ce second mode de réalisation, il y a six bras de commutation A, B, C donc douze commutateurs 12a, 12b. Lorsque six commutateurs 12a, 12b sont fermés, six autres commutateurs 12a, 12b sont ouverts. Sur les six commutateurs fermés 1/3 doit être des premiers commutateurs 12a sur le haut des bras de commutation.

On obtient donc un nombre constant $\underline{n}$ de deux premiers commutateurs 12a fermés sur six commutateurs fermés en tout, les quatre autres commutateurs fermés sont donc des seconds commutateurs 12b sur le bas des bras de commutation (relation (4)):

$$(4)\ n = 2.$$

Fonctionnement

En se référant également à la figure 5, lors du procédé de charge de la batterie B, on commande par exemple :

- d'une part la fermeture du premier interrupteur 12a du premier bras A pendant un temps de fermeture $tf_A$, et
- d'autre part la fermeture du premier interrupteur 12a du quatrième bras D pendant un temps de fermeture $tf_D$.

Les signaux de commande des bras de commutation A et D peuvent être déphasés comme dans l'exemple illustré, ou selon une alternative ces signaux de commande peuvent être en phase.

Lorsque le temps de fermeture $tf_A$ du premier commutateur 12a du premier bras A s'achève et que ce premier commutateur 12a s'ouvre, on commande la fermeture du premier commutateur 12a du troisième bras C pendant un temps de fermeture $tf_C$. Puis, lorsque le temps de fermeture $tf_C$ du premier commutateur 12a du troisième bras C s'achève et que ce premier commutateur 12a s'ouvre, on commande la fermeture du premier commutateur 12a du cinquième bras E pendant un temps de fermeture $tf_E$.

De même, lorsque le temps de fermeture $tf_D$ du premier commutateur 12a du quatrième bras D s'achève et que ce premier commutateur 12a s'ouvre, on commande la fermeture du premier commutateur 12a du sixième bras F pendant un temps de fermeture $tf_F$. Puis, lorsque le temps de fermeture $tf_F$ du premier commutateur 12a du sixième bras C s'achève et que ce premier commutateur 12a s'ouvre, on commande la fermeture du premier commutateur 12a du deuxième bras B pendant un temps de fermeture $tf_B$.

Comme précédemment, cette synchronisation permet d'avoir deux commutateurs 12 fermés en même temps. On assure ainsi une tension constante au neutre $\underline{N}$ du réseau 11.

En conclusion, avec un dispositif de charge 1 tel que décrit précédemment, on maintient une tension constante au niveau du neutre N du réseau 11, de façon à réduire les courants de mode commun qui peuvent être induits, même en cas de synchronisation non parfaite des fronts des impulsions.

L'invention n'est pas limitée aux exemples qui viennent d'être décrits et peut en particulier être utilisée indépendamment de la charge de moyens d'accumulation d'un véhicule électrique. L'invention vise plus généralement à commander les commutateurs de bras de commutation pour réduire les courants de mode commun.

## Revendications

1. Procédé de commande des commutateurs de bras de commutation (A, B, C, D, E, F), chaque bras de commutation comportant respectivement un premier (12a) et un deuxième (12b) commutateurs, le procédé étant **caractérisé en ce qu'**il comprend les étapes suivantes :

   a) on commande la fermeture d'un nombre prédéterminé de premiers commutateurs (12a) respectivement pendant un temps de fermeture ($tf_A$, $tf_B$, $tf_C$, $tf_D$, $tf_E$, $tf_F$) associé, et
   b) à chaque ouverture d'un premier commutateur (12a) précédemment fermé, on commande la fermeture d'un autre premier commutateur (12a) pendant un temps de fermeture ($tf_A$, $tf_B$, $tf_C$, $tf_D$, $tf_E$, $tf_F$) associé, de sorte qu'un nombre constant de premiers commutateurs (12a) sont fermés en même temps.

2. Procédé de charge de moyens d'accumulation (5) par l'intermédiaire d'un dispositif électrique de charge comprenant des bras de commutation (A, B, C, D, E, F) comportant respectivement un premier (12a) et un second (12b) commutateurs, la commande des commutateurs (12a, 12b) s'effectuant à l'aide au moins des étapes a) et b) du procédé selon la revendication 1

3. Procédé selon la revendication 1 ou 2, dans lequel on commande la fermeture desdits premiers commutateurs (12a) par transmission de signaux de commande de modulation par largeur d'impulsion PWM.

4. Procédé selon la revendication 3, dans lequel les signaux de commande sont en phase.

5. Procédé selon la revendication 3, dans lequel les signaux de commande sont déphasés.

6. Procédé selon la revendication 2 et l'une quelconque des revendications 3 à 5, le dispositif de charge étant triphasé et la modulation moyenne des phases du dispositif de charge est égale à 1/3.

7. Procédé selon la revendication 6, le rapport entre le nombre de premiers commutateurs (12a) fermés en même temps et le nombre total de premiers (12a) et seconds commutateurs (12b) fermés en même temps étant égal à 1/3.

8. Dispositif électrique de charge de moyens d'accumulation (5), ledit dispositif électrique comportant :

   - des bras de commutation (A, B, C, D, E, F) comprenant respectivement un premier (12a) et un second (12b) commutateurs, et
   - un dispositif de commande (9) desdits commutateurs (12a, 12b), **caractérisé en ce que**, lors de la charge des moyens d'accumulation (5), le dispositif de commande (9) est configuré :

     - pour commander la fermeture d'un nombre prédéterminé de premiers commutateurs (12a) respectivement pendant un temps de fermeture associé, et
     - pour commander à chaque ouverture d'un premier commutateur (12a) précédemment fermé la fermeture d'un autre premier commutateur (12a) pendant un temps de fermeture associé, de sorte qu'un nombre constant de premiers commutateurs (12a) soient fermés en même temps.

9. Dispositif selon la revendication 8, comportant trois bras de commutation (A, B, C).

10. Dispositif selon la revendication 8, comportant trois structures de pont en H (3, 3', 3") respectivement réalisées par deux bras de commutation (A, B, C, D, E, F).

11. Dispositif selon l'une quelconque des revendications 8 à 10, les commutateurs (12a, 12b) comportant respectivement un transistor et une diode en inverse.

12. Dispositif selon l'une quelconque des revendications 8 à 11, comportant un onduleur (2) comportant lesdits bras de commutation (A, B, C, D, E, F).

13. Dispositif selon la revendication 12, comportant un convertisseur DC/DC (10) entre l'onduleur (2) et les moyens d'accumulation (5).

14. Dispositif selon l'une quelconque des revendications 8 à 13, comportant un moteur à courant alternatif triphasé.

15. Dispositif selon la revendication 14, le dispositif de commande (9) étant configuré pour commander les commutateurs (12a,12b) de manière à passer d'un mode d'alimentation dudit moteur (6) à un mode de charge des moyens d'accumulation (5) et inversement.

**Patentansprüche**

1. Verfahren zur Steuerung der Schalter von Schaltarmen (A, B, C, D, E, F), wobei jeder Schaltarm jeweils einen ersten (12a) und einen zweiten (12b) Schalter aufweist, wobei das Verfahren **dadurch gekennzeichnet ist, dass** es die folgenden Schritte umfasst:

   a) es wird das Schließen einer vorbestimmten Anzahl von ersten Schaltern (12a) jeweils während einer zugeordneten Schließzeit ($tf_A$, $tf_B$, $tf_C$, $tf_D$, $tf_E$, $tf_F$) gesteuert, und
   b) bei jedem Öffnen eines vorab geschlossenen ersten Schalters (12a) wird das Schließen eines anderen ersten Schalters (12a) während einer zugeordneten Schließzeit ($tf_A$, $tf_B$, $tf_C$, $tf_D$, $tf_E$, $tf_F$) gesteuert, sodass eine konstante Anzahl an ersten Schaltern (12a) gleichzeitig geschlossen ist.

2. Verfahren zum Laden von Akkumulationsmitteln (5) über eine elektrische Vorrichtung zum Laden, umfassend Schaltarme (A, B, C, D, E, F), welche jeweils einen ersten (12a) und einen zweiten (12b) Schalter aufweisen, wobei die Steuerung der Schalter (12a, 12b) mithilfe mindestens der Schritte a) und b) des Verfahrens nach Anspruch 1 erfolgt.

3. Verfahren nach Anspruch 1 oder 2, bei dem das Schließen der genannten ersten Schalter (12a) durch Übertragung von Pulsweitenmodulationssteuersignalen PWM gesteuert wird.

4. Verfahren nach Anspruch 3, bei dem die Steuersignale in Phase sind.

5. Verfahren nach Anspruch 3, bei dem die Steuersignale phasenverschoben sind.

6. Verfahren nach Anspruch 2 und einem der Ansprüche 3 bis 5, wobei die Vorrichtung zum Laden dreiphasig ist und die mittlere Modulation der Phasen der Vorrichtung zum Laden gleich 1/3 ist.

7. Verfahren nach Anspruch 6, wobei das Verhältnis zwischen der Anzahl an gleichzeitig geschlossenen ersten Schaltern (12a) und der Gesamtanzahl an gleichzeitig geschlossenen ersten (12a) und zweiten Schaltern (12b) gleich 1/3 ist.

8. Elektrische Vorrichtung zum Laden von Akkumulationsmitteln (5), wobei die genannte elektrische Vorrichtung aufweist:

   - Schaltarme (A, B, C, D, E, F), umfassend jeweils einen ersten (12a) und einen zweiten (12b) Schalter,
   und
   - eine Vorrichtung zur Steuerung (9) der genannten Schalter (12a, 12b),
   **dadurch gekennzeichnet, dass** beim Laden der Akkumulationsmittel (5) die Vorrichtung zur Steuerung (9) konfiguriert ist:

   - um das Schließen einer vorbestimmten Anzahl von ersten Schaltern (12a) jeweils während einer zugeordneten Schließzeit zu steuern, und
   - bei jedem Öffnen eines vorab geschlossenen ersten Schalters (12a) das Schließen eines anderen ersten Schalters (12a) während einer zugeordneten Schließzeit zu steuern, sodass eine konstante Anzahl an ersten Schaltern (12a) gleichzeitig geschlossen ist.

9. Vorrichtung nach Anspruch 8, aufweisend drei Schaltarme (A, B, C).

10. Vorrichtung nach Anspruch 8, aufweisend drei H-Brückenstrukturen (3, 3', 3"), die jeweils durch zwei Schaltarme (A, B, C, D, E, F) realisiert sind.

11. Vorrichtung nach einem der Ansprüche 8 bis 10, wobei die Schalter (12a, 12b) jeweils einen Transistor und eine Diode in Sperrrichtung aufweisen.

12. Vorrichtung nach einem der Ansprüche 8 bis 11, aufweisend einen Wechselrichter (2), der die genannten Schaltarme (A, B, C, D, E, F) aufweist.

13. Vorrichtung nach Anspruch 12, aufweisend einen DC/DC-Wandler (10) zwischen dem Wechselrichter (2) und den Akkumulationsmitteln (5).

14. Vorrichtung nach einem der Ansprüche 8 bis 13, aufweisend einen Drehstrommotor.

15. Vorrichtung nach Anspruch 14, wobei die Vorrichtung zur Steuerung (9) konfiguriert ist, um die Schalter (12a, 12b) dergestalt zu steuern, dass von einem Modus der Stromversorgung des genannten Motors (6) zu einem Modus des Ladens der Akkumulationsmittel (5) übergegangen wird, und umgekehrt.

**Claims**

1. Method for controlling the switches of switching arms (A,B,C,D,E,F), each switching arm respectively comprising a first switch (12a) and a second switch (12b), the method being **characterized in that** it comprises the following steps:

a) a predetermined number of first switches (12a) are ordered to close respectively for an associated closure time $(tf_A, tf_B, tf_C, tf_D, tf_E, tf_F)$, and

b) on each opening of a first switch (12a) that was previously closed, another first switch (12a) is ordered to close for an associated closure time $(tf_A, tf_B, tf_C, tf_D, tf_E, tf_F)$, so that a constant number of first switches (12a) are closed at the same time.

2. Method for charging accumulation means (5) via an electric charging device comprising switching arms (A,B,C,D,E,F) respectively comprising a first switch (12a) and a second switch (12b), the control of the switches (12a, 12b) being performed with the aid at least of steps a) and b) of the method according to Claim 1.

3. Method according to Claim 1 or 2, in which said first switches (12a) are ordered to close by transmission of pulse width modulation PWM control signals.

4. Method according to Claim 3, in which the control signals are in phase.

5. Method according to Claim 3, in which the control signals are phase-shifted.

6. Method according to Claim 2 and any one of Claims 3 to 5, the charging device being three-phase and the average modulation of the phases of the charging device being equal to 1/3.

7. Method according to Claim 6, the ratio between the number of first switches (12a) closed at the same time and the total number of first (12a) and second (12b) switches closed at the same time being equal to 1/3.

8. Electric charging device for charging accumulation means (5), said electric device comprising:

- switching arms (A,B,C,D,E,F) respectively comprising a first (12a) and a second (12b) switch, and
- a control device (9) for controlling said switches (12a,12b),
**characterized in that**, during the charging of the accumulation means (5), the control device (9) is configured:

- to order the closure of a predetermined number of first switches (12a) respectively for an associated closure time, and
- to order, on each opening of a first switch (12a) that was previously closed, the closure of another first switch (12a) for an associated closure time, so that a constant number of first switches (12a) are closed at the same time.

9. Device according to Claim 8, comprising three switching arms (A,B,C).

10. Device according to Claim 8, comprising three H-configuration bridge structures (3,3',3') respectively formed by two switching arms (A,B,C,D,E,F).

11. Device according to any one of Claims 8 to 10, the switches (12a,12b) respectively comprising a transistor and a reverse diode.

12. Device according to any one of Claims 8 to 11, **characterized in that** it comprising an inverter (2) comprising said switching arms (A,B,C,D,E,F).

13. Device according to Claim 12, comprising a DC/DC converter (10) between the inverter (2) and the accumulation means (5).

14. Device according to any one of Claims 8 to 13, comprising a three-phase alternating current motor.

15. Device according to Claim 14, the control device (9) being configured to control the switches (12a,12b) so as to switch from a power supply mode for powering said motor (6) to a charging mode for charging the accumulation means (5), and vice versa.

## Fig.1

## Fig.2

## Fig.3

EP 2 408 087 B1

Fig.4

Fig.5

10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2938711 A1